# EUROPEAN PATENT SPECIFICATION

(11) **EP 4 552 717 B1**
(45) Date of publication and mention of the grant of the patent: **10.06.2026**
(21) Application number: 23209508.3
(22) Date of filing: 13.11.2023
(51) Int. Cl.: B01D 19/00, C02F 1/20, C02F 1/32

(54) **LIQUID SYSTEM SEPARATION DEVICE**
VORRICHTUNG ZUR TRENNUNG EINES FLÜSSIGKEITSSYSTEMS
DISPOSITIF DE SÉPARATION DE SYSTÈME LIQUIDE

(43) Date of publication of application: 14.05.2025
(73) Proprietor: ProTrenn GmbH, 86860 Jengen (DE)
(72) Inventor: Götzfried, Stefan, 86860 Jengen (DE); Völk, Reinhard, 86860 Jengen (DE)
(74) Representative: Lohr, Jöstingmeier & Partner Patent- und Rechtsanwälte mbB

(56) References cited:
- EP-A1- 2 540 673
- WO-A1-2009/063737
- WO-A2-2011/032543
- JP-A- 2003 212 754
- JP-A- H07 124 555
- RU-C1- 2 057 548
- US-A1- 2018 155 903
- US-B1- 6 447 721

## Description

### Field of the invention

The invention relates to a liquid system separation device (Issd). The liquid system separation device comprises at least a tank having a tank volume being enclosed by a tank bottom, a tank cover and a tank sidewall connecting the tank bottom and the tank cover. A tank inlet is in fluid communication with the tank volume and configured for being connected to a liquid providing system. A tank outlet is in fluid communication with the tank volume and may be configured to be connected to a liquid receiving system. A debubbler is located inside the tank and is configured to receive liquid entering the tank via the inlet. A flow passage having a flow passage inlet is configured to receive water from the debubbler and to provide a flow of the liquid via the flow passage towards the fluid outlet. A germ growth inhibiting radiation source with an enclosure is located between the tank cover and the debubbler.

### Description of the related art

Backflow prevention systems are designed to ensure that water flows in one direction only, preventing the contamination of an upstream potable water supply with germs or other harm causing contaminants that might be present in a downstream water distribution system. This is critical, e.g., if there is a risk of backflow from a contaminated water distribution system, which could introduce contaminants into the potable water. Typical examples of such potentially contaminated water distribution systems are slaughterhouse connections, firefighting water supply systems, etc...

Preventing a backflow has shown insufficient for preventing the migration of germs from the downstream water distribution system to the upstream water supply system. To this end so called liquid system separation devices have been suggested. These have a pressure tank with an inlet in a top portion and an outlet in the bottom portion. In operation, the pressure tank is partially filled, i.e., there is a water reservoir in the bottom portion of the tank. The water reservoir sources the outlet and is replenished with fresh water that pours from the inlet if water is withdrawn via the outlet. In between of the reservoir and the inlet is an air gap, preventing water being in contact with the tanks outlet from contacting the tank inlet. This measure significantly reduces the risk introducing contaminants from the water distribution system into the water supply system. Potential germ migration along the sidewall of the pressure tank towards the inlet may be prevented by an ultraviolet (UV) light source, being located in the air gap, and irradiating at least a ring surface enclosing the inlet. Such a liquid system separation device has been suggested in US-patent 11,053,669 B2. During operation of such liquid system separation devices, it is important that the air gap is maintained during operation. However, if the water pours out of the inlet into bubbles form in the reservoir and may leave the tank volume. To reduce this air leakage, it has been suggested to allow air bubbles to rise back into the air gap, e.g., by installing a debubbler below the inlet. Some debubblers reduce the downward component of the flow speed of the water below the speed with which bubbles rise, thereby enabling bubbles to leave the liquid.

US 2018/155903 A1 relates to a system separation device. EP 2 540 673 A1 relates to an ultraviolet oxidation device, an ultrapure water production device using same, an ultraviolet oxidation method, and an ultrapure water production method. JP H07 124555 A relates to a water purifying and activating method and apparatus. US 6 447 721 B1 relates to a drinking water UV disinfection system and method. RU 2 057 548 C1 relates to a container for decontaminating liquids. WO 2009/063737 A1 relates to a water purifying device and a water purifying method. JP 2003 212754 A relates to a bathing agent composition. WO 2011/032543 A2 relates to a self-disinfecting trap.

### Summary of the invention

The problem to be solved by the invention is to enhance operational safety of liquid systems that are arranged downstream of a liquid system separation device.

Solutions of the problem are described in the independent claims. The dependent claims relate to further improvements of the invention.

In an example, a liquid system separation device comprises at least a tank having a tank volume. The tank is preferably a pressure tank and may comprise a tank bottom, a tank cover and a tank sidewall connecting the tank bottom and the tank cover. The volume being enclosed by the tank bottom, the sidewall and the tank cover is the tank volume. The tank cover may as well be referred to as a tank top and is usually located opposite to the tank bottom.

The tank further comprises a tank inlet, being in fluid communication with the tank volume. The tank inlet is configured for being coupled to a liquid supply system. The liquid supply system may be, e.g., a water supply system. In particular, it may be a potable water supply system. Similarly, the liquid system separation device comprises a tank outlet, being configured to be coupled to a liquid receiving system. Only to avoid misunderstandings, of course the tank inlet can be coupled to the liquid supply system and the tank outlet may be coupled to the liquid receiving system, but in practice, the liquid system separation device is preferably provided only with the respective inlet connector and/or outlet connector enabling to couple the liquid system separation device with a liquid supply system via the tank inlet and and/or with the downstream liquid receiving system via the tank outlet.

Further, the term potable water supply system includes the entire system of sourcing, treating, distributing, and delivering water that is safe for human consumption. It encompasses the infrastructure involved in providing potable water. The term coupling means that the tank inlet is or is configured to be in fluid communication via a corresponding connector (e.g., a fluid coupling) with a conduit of the potable water supply system that is configured to supply potable water. The tank outlet may be in fluid communication with the tank volume and may further be configured to be coupled to a liquid receiving system, for example a sprinkler system of a structure such as a building or any kind of machinery. The liquid receiving system further distributes the liquid and may hence as well be referred to as liquid distribution system.

As already apparent, the tank may be a pressure tank. The term pressure tank shall express that other via the tank inlet or the tank outlet, the tank volume is not in fluid communication with the ambient atmosphere (under normal operating conditions, i.e., optional maintenance openings, optional pressure relief valves, etc. are assumed closed). In other words, if the tank inlet is connected to a liquid supply system and the tank outlet is connected to a liquid receiving system, the tank provides for a pressure exchange between these two systems while the resulting pressure is at least essentially independent from ambient pressure. In practice, the liquid pressure provided by the liquid supply system propagates through the tank into the liquid receiving system.

A debubbler is located in the tank volume, i.e., inside the tank. The debubbler is preferably configured to receive a liquid entering the tank via the tank inlet, for example, via an air gap between the tank inlet and the debubbler. A debubbler is a device or system configured to remove or eliminate bubbles, specifically air bubbles or gas bubbles, from the liquid.

The liquid system separation device further comprises a flow passage having a flow passage inlet. The flow passage inlet is configured to receive liquid (e.g., water) from the debubbler and to provide a flow of the liquid via the flow passage towards the tank outlet.

A germ growth inhibiting radiation source is located inside the tank volume and may have an enclosure. Typical enclosures are glass bulbs and/or glass tubes or other fragile germ growth inhibiting radiation transparent materials. Preferably, the germ growth inhibiting radiation source may be located between the tank cover and the debubbler. The germ growth inhibiting radiation source may preferably be configured to irradiate at least the tank inlet and/or the tank cover and/or the tank sidewall with germ growth inhibiting radiation. Many kind of germ growth inhibiting radiations are known, the most prominent example is electromagnetic radiation in the ultra-violet range, but as well γ -radiation or x-ray may be used.

It is particularly preferred, if a first mesh is located in the flow passage and/or in front of an intake of the flow passage and/or between the tank volume and the tank outlet. The first mesh may be configured to block fragments of glass or pieces of burst germ growth inhibiting radiation sources (hereinafter jointly *light source fragments*) that may be inside the tank volume and thereby prevent these from entering the flow passage and hence from leaving the tank volume via the tank outlet. The downstream liquid receiving system remains free from light source fragments that can have a negative impact not only on sprinkler systems by clogging sprinkler openings, but as well liquid system in general as valves may be blocked and gaskets may be cut. In the food industry (slaughterhouse application), undetected light source fragments may even contaminate meat products and hence harm humans.

Alternatively, a first shield is located above the flow passage inlet and extends over an outlet of the debubbler while not blocking, i.e., enabling a fluid communication between the debubbler and the flow passage inlet. This measure as well prevents light source fragments from entering the flow passage inlet. The first shield is hence preferably located between the at least one germ growth radiation source and the flow passage inlet. For example, the shield may be a ring, extending from the tank sidewall inwards, while being located preferably above the flow passage inlet and while preferably being spaced from the flow passage inlet. For example, the first shield may extend over a sidewall of debubbler, via which sidewall of the debubbler a liquid may flow into the flow passage inlet. This measure as well contributes to reduction of the risk that light source fragments may leave the tank volume via the tank outlet.

Both examples, i.e., the first mesh and the first shield, provide the same technical effect and are preferably combined, but each of these two measures may as well be used without the respective other measure.

The invention is based on the observation that germ growth inhibiting radiation sources that are operated inside pressure tanks in a humid atmosphere require a radiation transmissive enclosure, for example a glass bulb or a glass tube or the like. These enclosures, however, have a limited life span and burst. It is assumed that these observed bursts are caused by pressure fluctuations inside the tank. The resulting light source fragments may enter the downstream liquid receiving system and cause harm there as explained above, e.g. clog sprinkler openings, valves, etc.. Operation of the downstream liquid receiving system remains ensured, even in case a burst bulb or tube remained unobserved and/or occurs during operation of the downstream liquid receiving.

In a preferred example, the debubbler comprises a liquid receiving pot with a pot opening facing towards the tank inlet. In this example, the debubbler opening (which may be the pot opening) is defined by a rim and enables access of fresh liquid pouring from the tank inlet into the pot opening. Excess liquid leaves the debubbler for example via the opening (and/or a debubbler outlet) and may simply pour over the sidewall or via a dedicated outlet opening into the flow passage. Light source fragments falling into the pot remain at the bottom and are hence retained.

At least a portion of the flow passage may be located between the tank sidewall and the pot sidewall, as this arrangement allows a liquid flow, e.g. over the sidewall of the pot, into the flow passage. The liquid may flow via the flow passage into a liquid reservoir, being formed by the liquid (in operation) as explained in the prior art section. The technical teaching of US 2018 0155903 A1 is referred to.

Herein, we do not distinguish between the liquid in the reservoir and the volume configured to receive said liquid being stored directly above the tank outlet. The term liquid reservoir encompasses both, as the liquid system separation device will be delivered without the liquid, which will be filled in the reservoir volume and thereby provide the reservoir.

Preferably, at least a section of the flow passage is formed by a gap extending between an outer surface of the pot sidewall and an inner surface of the tank sidewall, wherein the gap inlet is the flow passage inlet. This construction is safe and reduces the risk of new bubble formation as well as the risk that light source fragments enter the flow passage. In a particularly preferred example the gap is a ring gap.

The first mesh may form a ring and may be located in and/or on top of the flow passage inlet. This example has the advantage that a light source fragment that by chance comes to reside on the mesh may not block the entire flow passage. Further, light source fragments or other debris may not leave the tank volume, as these are retained by the first mesh. The liquid supply of a downstream liquid receiving system that may be sourced by the tank outlet is not reduced.

It is further preferred, if the tank comprises a socket supporting a top portion of the germ growth inhibiting radiation source. For example, the socket may be attached to the tank cover and/or the tank sidewall. Both measures allow to insert at least a lower portion of the germ growth inhibiting radiation source into the tank volume, while a top portion of the germ growth inhibiting radiation source may be supported in the socket. Connection lines of the germ growth inhibiting radiation source may extend, e.g., via a socket cap to a power supply and/or a control unit. For example, the socket may comprise an outward facing surface, wherein outward references to the tank volume. The outward facing surface may support an inward facing surface of the top portion of the germ growth inhibiting light source. A gasket may be located between the outward facing surface of the socket and the inward facing surface of the top portion. The optional cap may extend over the top portion and press the downward facing surface against the up-facing surface, thereby sealing the tank preferably at least essentially gas tight (e.g. air tight). Summarizing, a first portion of the germ growth inhibiting radiation source 8 may be supported by the socket 18 relative to the tank.

In the invention, a bearing surface supports the free end of the germ growth inhibiting radiation source in at least a first direction, while allowing a translation of the free end in a second direction. For example, the outward facing surface may be tubular. The bearing surface supports the (e.g., tubular) germ growth inhibiting light source perpendicular to the longitudinal axis of the germ growth inhibiting radiation source, while allowing for a translation of the free end of the germ growth inhibiting radiation source. In this sense, the bearing surface may be considered as a linear bearing surface as it may allow for a translation of the free end of the germ growth inhibiting radiation source in the second direction, while blocking a translation of the free end of the germ growth inhibiting radiation source in the first direction. As already apparent , the first and the second direction are preferably orthogonal to each other.

Preferably, the second direction points towards the tank bottom and/or toward the first mesh. Both measures slow the lower portion down before it comes to a final abrupt stop. The risk of segmenting the lower portion of a fragmented germ growth inhibiting radiation source into a huge number of fragments is further reduced. This measure thus as well contributes to the effect of keeping the tank outlet clear of fragments while still allowing for large mesh size - which keeps pressure drop across in the liquid system separation device low.

In a preferred example a second mesh may be located between the tank inlet and the tank volume and/or between the tank inlet and the debubbler. This second mesh provides two advantages, the gas bubbles are further reduced and in case a backflow occurs, solids being bigger than the mesh size can contaminate the upstream liquid supply system.

As already apparent from the above, the first mesh and/or the second mesh may preferably be configured to retain broken pieces of the enclosure of the germ growth inhibiting radiation source from entering the tank outlet and/or the tank inlet, respectively. The mesh essentially functions as a filter media and the mesh size has to be selected such that light source fragments of a size that may cause harm to the downstream liquid receiving system are retained by the mesh. The first mesh and the first shield are preferably combined to thereby have two independently operating light source fragment retention means, enhancing safety.

Preferably, a sidewall of the debubbler has at least one protrusion that extends into the flow passage, e.g., towards the tank sidewall. In another example, the tank sidewall may have at least one protrusion extending from the tank sidewall into the flow passage. In both examples an up-facing surface of the protrusion may support the first mesh. A portion of the first mesh may as well be located in the flow passage.

In a preferred example, the liquid system separation device may comprise a differential pressure sensor. The differential pressure sensor may have a first sensor inlet and a second sensor inlet. The first sensor inlet is preferably in fluid communication with a first portion of the tank volume above the first mesh and the second sensor inlet may be in fluid communication with a second portion of the tank volume, wherein the first portion of the tank volume and the second portion of the tank volume are separated by the first mesh. An increase in the pressure drop across the first mesh can be detected by a controller of the liquid system separation device. Such increase can be signaled to thereby trigger maintenance of the liquid system separation device. The signal can be indicative of a clogged first mesh and/or flow passage inlet.

A preferred application of the liquid system separation device is structure, like e.g., a building having a water-based fire extinguishing media distribution system, e.g., a sprinkler system. Unless activated, the water-based fire extinguishing media distribution system is (hopefully) not regularly flushed and hence germs may populate the fire extinguishing media distribution system. If the water-based fire extinguishing media distribution system is coupled to the potable water net via the liquid system separation device, a contamination of the potable water net by germs residing in the fire extinguishing media distribution system can be excluded, further safe operation of the fire extinguishing media distribution system is not compromised by fragments of germ growth inhibiting light sources. Hence, the structure, such as a building, may comprise the above-described liquid system separation device, and the tank inlet is preferably coupled to the potable water grid of the structure, which grid may as well be referred to as plumbing of the structure. The tank outlet may preferably be coupled to a water inlet of the fire extinguishing media distribution system.

Above, the invention has been described with reference to any liquid that has to be delivered from a liquid supply system to a liquid receiving system. Water is only a preferred example, but the principle of the invention is not limited to water. For example, gasoline tanks of aircraft or ships often suffer from germ contamination. To avoid such germs to be spread via a gas pump from vessel to vessel the liquid system separation device may as well be used either abord of the vessel and/or integrated in the gas station. For example, the tank inlet may be coupled to a supply pipeline connecting the tank inlet with a fuel reservoir and the tank outlet may be coupled to a fuel hose, thereby preventing contamination of the fuel reservoir. Similar problems are known in the food industry, the chemical industry and pharmaceutical industry and these may as well be solved by the liquid system separation device.

Herein, as usual the directions "upward" and "downward" indicate a vector pointing parallel to the tank wall from the tank bottom to the tank cover and from the tank cover to the tank bottom, respectively. The tank cover and the tank bottom reference to the orientation of the liquid system separation device during normal operating conditions, hence the gravity vector points from the tank cover towards the tank bottom, assuming the tank wall extends at least essentially vertically.

As usual in the present technical field, two fluid transportation means (like e.g., a tube, a conduit, etc.) or storage means (such as a tank) are considered to be coupled if there is a fluid communication between these means. The fluid communication may be blocked by a valve, but is generally possible (if the valve is open). A pure attachment of these means would provide an adherence of the two parts, but not enable said fluid communication.

### Description of Drawings

In the following the invention will be described by way of example, without limitation of the general inventive concept, on examples of embodiment with reference to the drawings.
- Figure 1: presents two first liquid system separation devices being connected in parallel between a liquid source system and liquid receiving system.
- Figure 2: presents a side view of a first liquid system separation device.
- Figure 3: presents a sectional view along the plane D-D as shown in FIG. 2.
- Figure 4: presents a sectional view of a second liquid system separation device.

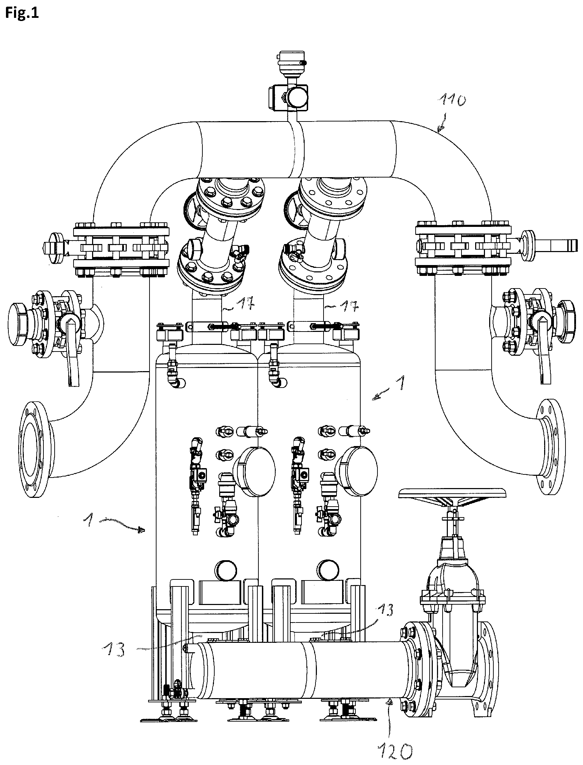

FIG. 1 shows two first examples 1 of a liquid system separation device 1. The number two can be altered between 1 and any other natural number, as required, but two is a preferred example as it provides for a redundancy in case one of the two liquid system separation devices is blocked or for another reason out of order. The liquid system separation devices 1 each have a tank 10 with a tank inlet 17 and a tank outlet 13. The tank inlets 17 may be connected to a conduit of a liquid supply system 110, which in the present case can be, e.g., a potable water grid of a building or any other kind of structure. The tank outlets 13 may be connected to a conduit of a liquid receiving system 120, like e.g., a sprinkler system of the structure. The liquid supply system 110 and the liquid receiving system 120 are each part of the structure and shall be considered to represent such structure that comprises at least one of these as pars pro toto.

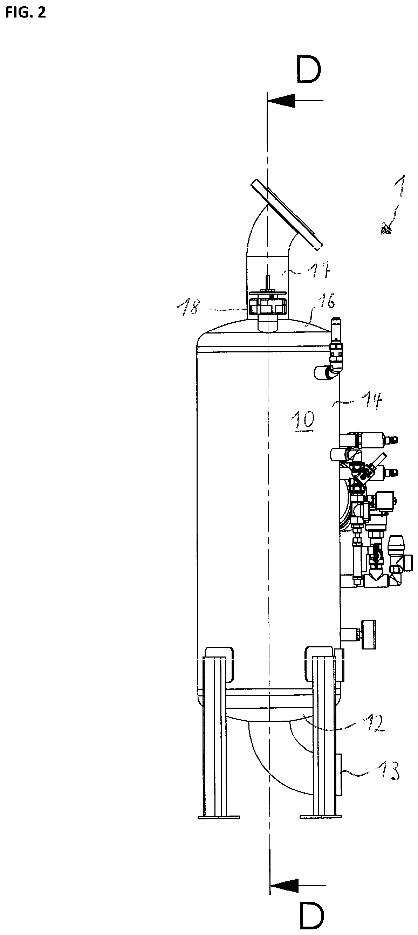

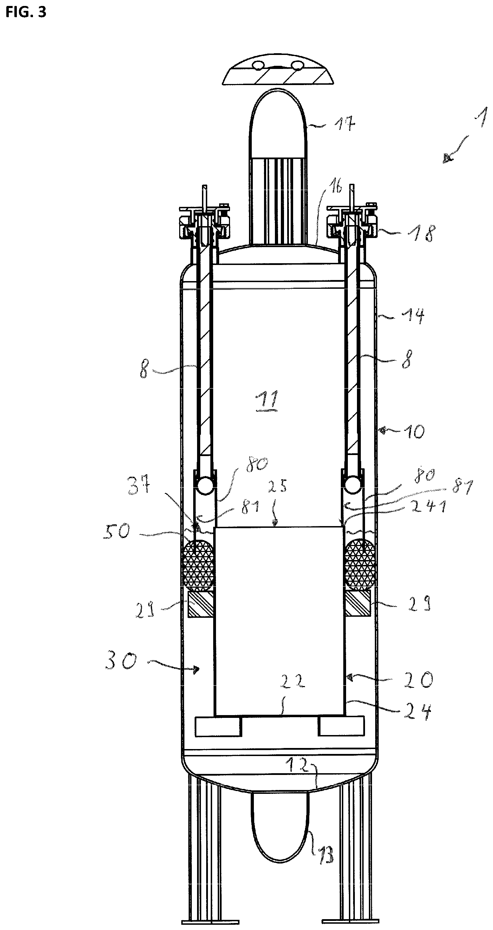

In FIG. 2 and in FIG. 3, a first liquid system separation device 1 of the two first liquid system separation devices 1 of FIG. 1 is presented: The first liquid system separation device 1 has a tank 10 with a tank bottom 12, a tank sidewall 14 and a tank cover 16 as well referred to as tank top 16 that jointly enclose and hence define a tank volume 11. The tank cover 16 may have a tank inlet 17 and the tank bottom 12 may have a tank outlet 13. The tank inlet 17 may be configured to be coupled to the conduit of the liquid supply system 120 (see FIG. 1) and the tank outlet 13 may be configured to be coupled to conduit of a liquid receiving system, like, e.g., a fire extinguishing media distribution system (see FIG. 1).

Above the bottom 12 may be a debubbler 20 (see FIG. 3). As shown, the debubbler 20 may be considered as a receiving pot and the debubbler may comprise a debubbler bottom 22 and debubbler sidewall 24 defining a debubbler opening 25. A fluid entering the tank volume 11 via the tank inlet 17 from the top may pour into the debubbler 20 via e.g., a center portion of the debubbler opening 25. Bubbles may rise and excess liquid may flow over the up-facing surface 241 of the debubbler sidewall 24. The up-facing surface 241 may as well be referred to as tank cover 16 facing surface 241 and may be considered as the debubbler outlet 241, but other debubbler outlets 241 can be used as well (e.g. one or more through holes in the debubbler sidewall 24).

Between the tank sidewall 14 and the debubbler sidewall 24 is a flow passage 30 connecting the debubbler outlet 241 with the tank outlet via a liquid reservoir 40 that is filled when operating the liquid system separation device 1. The liquid reservoir 40 is indicated by a liquid level 40, to render it vivid. An upper portion of the flow passage 30 may form a ring gap 37 and define a flow passage inlet 37.

Preferably, one or more germ growth inhibiting radiation sources 8, such as an ultraviolet (UV) light emitting tubes 8 may be located in the tank volume 11 below the tank cover 16 and above the debubbler opening. During normal operation, the portion of the tank volume 11 above the debubbler 20 is preferably filled with a gas (e.g., air). The germ growth inhibiting radiation sources 8 may hence be configured to irradiate at least the boundary of the tank inlet 17 and/or a ring surface enclosing the tank inlet 17.

The one or more germ growth inhibiting radiation sources 8 have a top portion that may extend through a socket 18 being attached to the tank cover 16. As shown, the socket 18 may provide an outward facing surface supporting an inward facing surface of the top portion. A gasket may be located between the up-facing surface of the socket 18 and the downward facing surface of the top portion. A cap may extend over the top portion and press the downward facing surface against the up-facing surface, thereby sealing the tank preferably at least essentially gas tight (e.g. air tight). Generally, the support provided by the socket 18 is more than sufficient to position the germ growth inhibiting radiation sources 8 in the tank volume 11. However, experiments revealed that the life span of germ growth inhibiting radiation sources 8 can be extended significantly, if the free ends of the germ growth inhibiting radiation sources 8 are each supported by at least one plain bearing surface 81 enabling a movement of the free end along the axis of the respective germ growth inhibiting radiation source 8, while supporting the free end in at least one of the radial directions. The free ends of the germ growth inhibiting radiation sources 8 may hence slide over the respective plain bearing surfaces and thus form a linear bearing allowing for a translation of the free ends of the germ growth inhibiting radiation sources 8 relative to the tank cover. In the present preferred example, the plain bearing surface 81 is the inner surface of a sleeve 80 being attached (at least indirectly) to the tank 10.

As depicted in FIG. 3, the free ends of the germ growth inhibiting radiation sources 8 may each extend into a sleeve 80 being oriented at least essentially parallel to the longitudinal axis of the respective germ growth inhibiting radiation source 8. , wherein sleeve radially supports the free end of the germ growth inhibiting radiation sources 8. The sleeves 80 may have openings, e.g. slits or any other kind of through hole and/or be entirely transparent for the germ growth inhibiting radiation may be emitted by the germ growth inhibiting radiation sources 8.

The optional sleeves 80 further reduce the number of fragments, in case a germ growth inhibiting radiation source 8 breaks: It has been observed that in case a germ growth inhibiting radiation source breaks, the lower portion, i.e. the portion below the break or crack simply falls down. In the depicted example this portion slides down the sleeves without falling to the side, thereby avoiding that the lower portion of the broken germ growth inhibiting radiation source splitters in a huge number of small fragments. It is particularly preferred if the lower ends of the sleeves are open and preferably configured to be below the liquid level 40 that remains during operation on the tank bottom 12. In addition or alternatively, it is preferred, if the lower ends of the sleeves 80 are located above the first mesh 50. Both measures further reduce the risk of a huge number of fragments, as these jointly contribute to the effect of slowing the lower portion sliding down slowly, i.e. not abruptly.

As shown in FIG. 3, a first mesh 50 may be located above and/or in the flow passage 30, e.g. in inlet section of the flow passage 30. Preferably, the first mesh 50 may extend above the debubbler outlet, radially and/or axially (with reference to the vertical axis 2 of the tank 10) while not blocking a fluid communication between the debubbler 20 and the flow passage inlet 37, thereby providing for an additional protection of the flow passage inlet 37, as at least some radiation source fragments falling on the first mesh 50 may slide off the first mesh into the debubbler, i.e. finally these will accumulate on the debubbler bottom 22. As shown, the first mesh 50 may be supported on protrusions 29 that may extend from the debubbler sidewall 24 into the flow passage. In case one or more of the germ growth inhibiting radiation sources 8 breaks during operating, fragments of the germ growth inhibiting radiation sources 8 will be retained by the first mesh and may hence not be transported by the liquid flow via the tank outlet 13 into a liquid receiving system that may preferably be attached to the tank outlet 13 of the liquid system separation device 1.

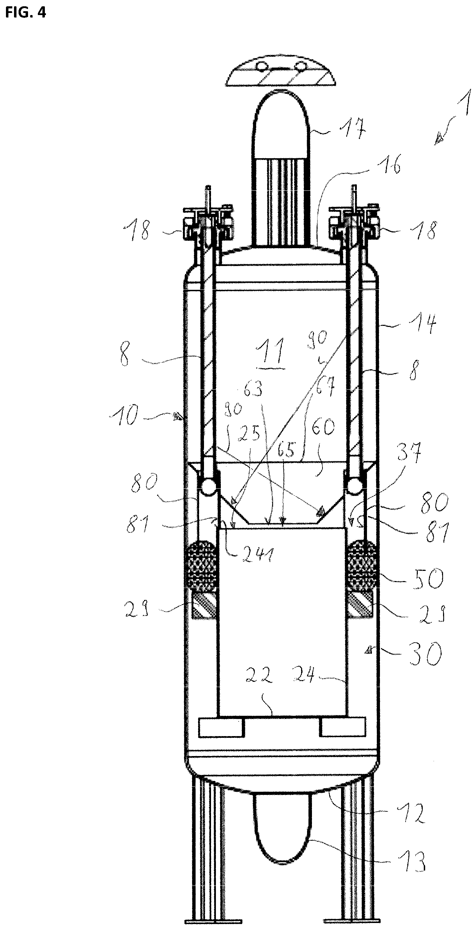

The example presented in FIG. 4 is very similar to the example presented in FIG. 1 and 2 and the description of FIG. 1 and 2 can be read with respect to the liquid system separation device of FIG. 4 as well. Only the differences will be explained: In addition to the first mesh 50, an optional first shield 60 may be located above the flow passage inlet 37 and extend over the outlet 241 of the debubbler 24 while not blocking a fluid communication between the debubbler 20 and the flow passage inlet 37. The optional first shield 60 as well prevents radiation source fragments from entering the flow passage inlet 37. The first shield 60 may hence preferably be located between below the at least one germ growth inhibiting radiation source 8 and the flow passage inlet 37. As shown, the first shield 60 may be a ring having a ring opening 65 being located below the tank inlet 17 and above the opening 25 of the debubbler. Hence, the first shield is preferably configured to provide a direct path for a liquid flowing out of the tank inlet 17 into the tank volume into the debubbler opening 25, e.g. via said ring opening 65. As can be seen, the outer edge of the first shield 60 may be located above the inner ring surface 64 which delimits the first shield towards the ring opening 65. In this sense, the shield may be frustrated cone, but other shapes are possible as well.

The first shield 60 may preferably extend from the tank sidewall 14 inwards above the flow passage inlet 37, while being spaced from the flow passage inlet 37 vertically. In other words, a vertical projection of the inner rim of the first shield 60 may preferably be more inward than the up-facing surface 241 of the debubbler sidewall 24. Further, a ray 90 from any point of the germ growth inhibiting radiation sources 8 towards the inlet 37 of the flow passage 30 is blocked by the first shield 60. This provides the advantage that no fragment of a potentially bursting germ growth inhibiting radiation source 8 may reach the inlet 37 of the flow passage 30. Like in the depicted example, the first shield 60 may extend over the debubbler sidewall 24 and hence over the debubbler outlet 241 being defined in this example by the up-facing surface 241 of the debubbler sidewall 24.

The first shield 60 has been shown together with the first mesh 50, which is considered as a preferred example, but in particular if the liquid system separation system 1 has a first shield 60, the first mesh 50 can be omitted and vice versa.

### List of reference numerals

1 liquid system separation device
8 germ growth inhibiting radiation source (e.g., UV light emitting tube)
10 tank
11 tank volume
12 tank bottom
12 tank outlet
14 tank sidewall
16 tank cover /tank top
17 tank inlet
20 debubbler /pot
22 debubbler bottom / pot bottom
24 debubbler sidewall / pot sidewall
241 up-facing surface of debubbler sidewall
25 debubbler opening (in this example serving as debubbler inlet and debubbler outlet)
29 protrusion
30 flow passage
37 flow passage inlet/ upper portion of a ring gap section of flow passage between tank sidewall 14 and debubbler sidewall 24
40 reservoir / liquid level in the reservoir
50 first mesh
60 first shield
65 opening of first shield
80 sleeve / radial support of free end of the germ growth inhibiting radiation source
90 ray
100 structure
110 liquid supply system (such as a potable water system) / pars pro toto of structure, such as a building structure
120 liquid receiving system (such as a fire media distribution system / sprinkler system, e.g., a sprinkler liquid inlet tube) / pars pro toto of a structure, such as a building structure

## Claims

1. Liquid system separation device (1) comprising at least:
- a tank (10) having a tank volume (11) being enclosed by a tank bottom (12), a tank cover (16) and a tank sidewall (14) connecting the tank bottom (12) and the tank cover (16),
- a tank inlet (17) in fluid communication with the tank volume (11) and configured for being connected to a liquid supply system (110),
- a tank outlet (13) in fluid communication with the tank volume (11) configured to be connected to a liquid receiving system (120),
- a debubbler (20) located inside the tank volume (11) and configured to receive liquid entering the tank (10) via the tank inlet (17),
- a flow passage (30) having a flow passage inlet (37), configured to receive liquid from the debubbler (20) and to provide a flow of liquid via the flow passage (30) towards the tank outlet (13), and
- a germ growth inhibiting radiation source (8) having an enclosure and being located between the tank cover (16) and the debubbler (20), wherein the germ growth inhibiting radiation source (8) is configured to irradiate at least the tank inlet (17) and/or the tank cover (16) and/or the tank sidewall (14),
**characterized in that**:
a bearing surface (81) supports a free end of the germ growth inhibiting radiation source (8) in at least a first direction, while allowing a translation of the free end in a second direction and a first mesh (50) is located in the flow passage (30) and/or in front of the inlet (37) of the flow passage (30) and/or between the tank volume (11) and the tank outlet (13); and/or a first shield (60) is located above the flow passage inlet (37) and extends over an outlet of the debubbler (20) while enabling a fluid communication between the debubbler (20) and the flow passage inlet (37) .

2. The liquid system separation device (1) of claim 1, **characterized in that**
the debubbler (20) comprises a receiving pot with a debubbler opening (25) facing towards the tank inlet (17), wherein at least a portion of the flow passage (30) is located between the tank sidewall (14) and a debubbler sidewall (24); and
at least a section of the flow passage (30) is formed by a gap extending between an outer surface of the debubbler sidewall (24) and an inner surface of the tank sidewall (14), wherein the gap inlet is the flow passage inlet (37).

3. The liquid system separation device (1) of claim 2,
**characterized in that** the gap is a ring gap.

4. The liquid system separation device of the previous claim
**characterized in that** that the first mesh (50) forms a ring and is located in or on top of the flow passage inlet (37).

5. The liquid system separation device (1) of one of the previous claims, **characterized in that**
a socket (18) is attached to the tank cover (16) and/or the tank sidewall (14), wherein a first portion of the germ growth inhibiting radiation source (8) is supported by the socket (18).

6. The liquid system separation device (1) of the previous claims, characterized in thatthere is a first point of the free end of the radiation source (8), a second point of the tank bottom, and a third point of the first mesh (50), wherein the vector between the first and the second point and/or the vector between the first and the third point have/has the second direction.

7. The liquid system separation device (1) of one of the previous claims, **characterized in that**
a second mesh is located between the tank inlet (17) and the tank volume (11) and/or between the tank inlet (11) and the debubbler (20).

8. The liquid system separation device (1) of one of the previous claims, **characterized in that** at least one protrusion (29) extends from a sidewall (24) of the debubbler (20) towards the tank sidewall (14) and/or from the tank sidewall (14) towards the debubbler (20) and **in that** an up-facing surface of the at least one protrusion (29) supports the first mesh (50), wherein at least a portion of the first mesh (50) is preferably located in the gap.

9. The liquid system separation device (1) of one of the previous claims, **characterized in that** the liquid system separation device (1) comprises a differential pressure sensor having a first sensor inlet and a second sensor inlet and **in that** the first sensor inlet is in fluid communication with a first portion of the tank volume (11) above the first mesh (50) and the second sensor inlet is in fluid communication with a second portion of the tank volume (11), wherein the first portion of the tank volume (11) and the second portion of the tank volume (11) are separated by the first mesh (50).

10. A structure comprising at least a liquid system separation device (1) of one of the previous claims, a sprinkler system with a sprinkler liquid inlet tube (120) and at least one sprinkler outlet, wherein the tank inlet (17) is connected to a potable water supply tube (110) and the sprinkler liquid inlet tube is connected to the tank outlet (13).

## Patentansprüche

1. Flüssigkeitssystemtrennvorrichtung (1), aufweisend mindestens:
- einen Tank (10) mit einem Tankvolumen (11), welches von einem Tankboden (12), einer Tankabdeckung (16) und einer Tankseitenwand (14), die den Tankboden (12) und die Tankabdeckung (16) verbindet, umschlossen ist,
- einen Tankeinlass (17) in Fluidverbindung mit dem Tankvolumen (11), welcher dazu konfiguriert ist, an ein Flüssigkeitsversorgungssystem (110) angeschlossen zu werden,
- einen Tankauslass (13) in Fluidverbindung mit dem Tankvolumen (11), welcher dazu konfiguriert ist, an ein Flüssigkeitsaufnahmesystem (120) angeschlossen zu werden,
- einen Entlüfter (20), welcher im Inneren des Tankvolumens (11) angeordnet ist und dazu konfiguriert ist, Flüssigkeit aufzunehmen, die über den Tankeinlass (17) in den Tank (10) eintritt,
- ein Strömungskanal (30) mit einem Strömungskanaleinlass (37), welcher dazu konfiguriert ist, Flüssigkeit vom Entlüfter (20) aufzunehmen und einen Flüssigkeitsstrom über den Strömungskanal (30) zum Tankauslass (13) bereitzustellen, und
- eine keimwachstumshemmende Strahlungsquelle (8), welche eine Einhausung hat und zwischen der Tankabdeckung (16) und dem Entlüfter (20) angeordnet ist, wobei die keimwachstumshemmende Strahlungsquelle (8) dazu konfiguriert ist, mindestens den Tankeinlass (17) und/oder die Tankabdeckung (16) und/oder die Tankseitenwand (14) zu bestrahlen,
**dadurch gekennzeichnet, dass**
eine Lagerfläche (81) ein freies Ende der keimwachstumshemmenden Strahlungsquelle (8) in mindestens einer ersten Richtung trägt, während sie eine Translation des freien Endes in einer zweiten Richtung erlaubt und ein erstes Netz (50) im Strömungskanal (30) und/oder vor einem Einlass (37) des Strömungskanals (30) und/oder zwischen dem Tankvolumen (11) und dem Tankauslass (13) angeordnet ist; und/oder ein erster Schutzschild (60) oberhalb des Strömungskanaleinlasses (37) angeordnet ist und sich über einen Auslass des Entlüfters (20) erstreckt, während eine Fluidverbindung zwischen dem Entlüfter (20) und dem Strömungskanaleinlass (37) ermöglicht wird.

2. Die Flüssigkeitssystemtrennvorrichtung (1) nach Anspruch 1,
**dadurch gekennzeichnet, dass**
der Entlüfter (20) einen Auffangbehälter aufweist mit einer Entlüfteröffnung (25), die dem Tankeinlass (17) zugewandt ist, wobei mindestens ein Teil des Strömungskanals (30) zwischen der Tankseitenwand (14) und einer Entlüfterseitenwand (24) angeordnet ist; und
mindestens ein Abschnitt des Strömungskanals (30) durch einen Spalt gebildet wird, der sich zwischen einer Außenfläche der Entlüfterseitenwand (24) und einer Innenfläche der Tankseitenwand (14) erstreckt, wobei der Spalteinlass der Strömungskanaleinlass (37) ist.

3. Die Flüssigkeitssystemtrennvorrichtung (1) nach Anspruch 2, **dadurch gekennzeichnet, dass** der Spalt ein Ringspalt ist.

4. Die Flüssigkeitssystemtrennvorrichtung nach dem vorhergehenden Anspruch, **dadurch gekennzeichnet, dass** das erste Netz (50) einen Ring bildet und im oder über dem Strömungskanaleinlass (37) angeordnet ist.

5. Die Flüssigkeitssystemtrennvorrichtung (1) nach einem der vorhergehenden Ansprüche, **dadurch gekennzeichnet, dass** ein Sockel (18) an der Tankabdeckung (16) und/oder der Tankseitenwand (14) angebracht ist, wobei ein erster Teil der keimwachstumshemmenden Strahlungsquelle (8) von dem Sockel (18) getragen wird.

6. Die Flüssigkeitssystemtrennvorrichtung (1) nach den vorhergehenden Ansprüchen, **dadurch gekennzeichnet, dass** ein erster Punkt des freien Endes der Strahlungsquelle (8), ein zweiter Punkt des Tankbodens, und ein dritter Punkt des ersten Netzes (50) vorhanden sind, wobei der Vektor zwischen dem ersten und zweiten Punkt und/oder der Vektor zwischen dem ersten und dritten Punkt eine zweite Richtung haben/hat.

7. Die Flüssigkeitssystemtrennvorrichtung (1) nach einem der vorhergehenden Ansprüche, **dadurch gekennzeichnet, dass** ein zweites Netz zwischen dem Tankeinlass (17) und dem Tankvolumen (11) und/oder zwischen dem Tankeinlass (17) und dem Entlüfter (20) angeordnet ist.

8. Die Flüssigkeitssystemtrennvorrichtung (1) nach einem der vorhergehenden Ansprüche, **dadurch gekennzeichnet, dass** sich mindestens ein Vorsprung (29) von einer Seitenwand (24) des Entlüfters (20) in Richtung der Tankseitenwand (14) und/oder von der Tankseitenwand (14) in Richtung des Entlüfters (20) erstreckt und dass eine nach oben weisende Oberfläche des mindestens einen Vorsprungs (29) das erste Netz (50) trägt, wobei mindestens ein Teil des ersten Netzes (50) in dem Spalt angeordnet ist.

9. Die Flüssigkeitssystemtrennvorrichtung (1) nach einem der vorhergehenden Ansprüche **dadurch gekennzeichnet, dass** die Flüssigkeitssystemtrennvorrichtung (1) einen Differentialdrucksensor mit einem ersten Sensoreinlass und einem zweiten Sensoreinlass aufweist und dass der erste Sensoreinlass in Fluidverbindung mit einem ersten Teil des Tankvolumens (11) oberhalb des ersten Netzes (50) steht und der zweite Sensoreinlass in Fluidverbindung mit einem zweiten Teil des Tankvolumens (11) steht, wobei der erste Teil des Tankvolumens (11) und der zweite Teil des Tankvolumens (11) durch das erste Netz (50) getrennt sind.

10. Ein Aufbau, aufweisend mindestens eine Flüssigkeitssystemtrennvorrichtung (1) nach einem der vorhergehenden Ansprüche, ein Sprinklersystem mit einem Sprinklerflüssigkeitseinlassrohr (120) und mindestens einem Sprinklerauslass, wobei der Tankeinlass (17) mit einem Trinkwasserzuleitungsrohr (110) verbunden ist und das Sprinklerflüssigkeitseinlassrohr mit dem Tankauslass (13) verbunden ist.

## Revendications

1. Dispositif de séparation de système liquide (1) comprenant au moins :
- un réservoir (10) ayant un volume (11) de réservoir enceint par un fond (12) de réservoir, un couvercle (16) de réservoir et une paroi latérale (14) de réservoir reliant le fond (12) de réservoir et le couvercle (16) de réservoir,
- une entrée (17) de réservoir en communication fluidique avec le volume (11) de réservoir et configurée pour être reliée à un système d'alimentation en liquide (110),
- une sortie (13) de réservoir en communication fluidique avec le volume (11) de réservoir, configurée pour être reliée à un système de réception de liquide (120),
- un débulleur (20) situé à l'intérieur du volume (11) de réservoir et configuré pour recevoir du liquide entrant dans le réservoir (10) via l'entrée (17) de réservoir,
- un passage d'écoulement (30) comportant une entrée (37) de passage d'écoulement, configuré pour recevoir du liquide provenant du débulleur (20) et pour assurer un écoulement de liquide via le passage d'écoulement (30) vers la sortie (13) de réservoir, et
- une source de rayonnement inhibant la croissance de germes (8) comportant une enceinte et située entre le couvercle (16) de réservoir et le débulleur (20), dans lequel la source de rayonnement inhibant la croissance de germes (8) est configurée pour irradier au moins l'entrée (17) de réservoir et/ou le couvercle (16) de réservoir et/ou la paroi latérale (14) de réservoir,
**caractérisé en ce que** :
une surface d'appui (81) supporte une extrémité libre de la source de rayonnement inhibant la croissance de germes (8) dans au moins une première direction, tout en permettant une translation de l'extrémité libre dans une deuxième direction, et un premier maillage (50) est situé dans le passage d'écoulement (30) et/ou devant l'entrée (37) du passage d'écoulement (30) et/ou entre le volume (11) de réservoir et la sortie (13) de réservoir ; et/ou un premier écran (60) est situé au-dessus de l'entrée (37) de passage d'écoulement et s'étend sur une sortie du débulleur (20) tout en permettant une communication fluidique entre le débulleur (20) et l'entrée (37) de passage d'écoulement.

2. Dispositif de séparation de système liquide (1) selon la revendication 1, **caractérisé en ce que**
le débulleur (20) comprend un pot de réception avec une ouverture (25) de débulleur en regard vers l'entrée (17) de réservoir, dans lequel au moins une portion du passage d'écoulement (30) est située entre la paroi latérale (14) de réservoir et une paroi latérale (24) de débulleur ; et
au moins une section du passage d'écoulement (30) est formée par un espace s'étendant entre une surface externe de la paroi latérale (24) de débulleur et une surface interne de la paroi latérale (14) de réservoir, dans lequel l'entrée de l'espace est l'entrée (37) de passage d'écoulement.

3. Dispositif de séparation de système liquide (1) selon la revendication 2,
**caractérisé en ce que** l'espace est un espace annulaire.

4. Dispositif de séparation de système liquide selon la revendication précédente
**caractérisé en ce que** le premier maillage (50) forme un anneau et est situé dans ou au-dessus de l'entrée (37) de passage d'écoulement.

5. Dispositif de séparation de système liquide (1) selon l'une des revendications précédentes, **caractérisé en ce que**
un socle(18) est fixée au couvercle (16) du réservoir et/ou à la paroi latérale (14) du réservoir, dans lequel une première portion de la source de rayonnement inhibant la croissance de germes (8) est supportée par le socle(18).

6. Dispositif de séparation de système liquide (1) selon l'une des revendications précédentes, **caractérisé en ce qu'**il existe un premier point de l'extrémité libre de la source de rayonnement (8), un deuxième point du fond de réservoir et un troisième point du premier maillage (50), dans lequel le vecteur entre le premier et le deuxième point et/ou le vecteur entre le premier et le troisième point a/ont la deuxième direction.

7. Dispositif de séparation de système liquide (1) selon l'une des revendications précédentes, **caractérisé en ce que**
un deuxième maillage est situé entre l'entrée (17) de réservoir et le volume (11) de réservoir et/ou entre l'entrée (17) de réservoir et le débulleur (20).

8. Dispositif de séparation de système liquide (1) selon l'une des revendications précédentes, **caractérisé en ce qu'**au moins une saillie (29) s'étend depuis une paroi latérale (24) du débulleur (20) vers la paroi latérale (14) de réservoir et/ou depuis la paroi latérale (14) de réservoir vers le débulleur (20) et **en ce qu'**une surface en regard vers le haut de l'au moins une saillie (29) supporte le premier maillage (50), dans lequel au moins une portion du premier maillage (50) est de préférence située dans l'espace.

9. Dispositif de séparation de système liquide (1) selon l'une des revendications précédentes, **caractérisé en ce que** le dispositif de séparation de système liquide (1) comprend un capteur de pression différentielle ayant une première entrée de capteur et une deuxième entrée de capteur, et **en ce que** la première entrée de capteur est en communication fluidique avec une première portion du volume (11) de réservoir au-dessus du premier maillage (50) et la deuxième entrée de capteur est en communication fluidique avec une deuxième portion du volume (11) de réservoir, dans lequel la première portion du volume (11) de réservoir et la deuxième portion du volume (11) de réservoir sont séparées par le premier maillage (50).

10. Structure comprenant au moins un dispositif de séparation de système liquide (1) selon l'une des revendications précédentes, un système d'arrosage avec un tube d'entrée de liquide d'arrosage (120) et au moins une sortie d'arrosage, dans laquelle l'entrée (17) de réservoir est reliée à un tube d'alimentation en eau potable (110) et le tube d'entrée de liquide d'arrosage est relié à la sortie (13) de réservoir.
